# EUROPEAN PATENT SPECIFICATION

(11) **EP 3 469 199 B1**
(45) Date of publication and mention of the grant of the patent: **22.09.2021**
(21) Application number: 17810636.5
(22) Date of filing: 19.05.2017
(51) Int. Cl.: F01P 7/16, B60H 1/00, B60K 11/04, F01P 3/20

(54) **COOLING SYSTEM FOR COOLING AN ELECTRIC POWER UNIT**
KÜHLSYSTEM FÜR EIN ELEKTROAGGREGAT
SYSTÈME DE REFROIDISSEMENT D'UN BLOC D'ALIMENTATION ÉLECTRIQUE

(30) Priority: 09.06.2016 SE 1650808
(43) Date of publication of application: 17.04.2019
(73) Proprietor: Scania CV AB, 151 87 Södertälje (SE)
(72) Inventor: MUSTONEN, Markus, 135 42 Tyresö (SE)
(74) Representative: Scania CV AB
(86) International application number: PCT/SE2017/050530
(87) International publication number: WO 2017/213573

(56) References cited:
- EP-A2- 2 392 486
- EP-A2- 3 012 133
- WO-A1-2015/080659
- WO-A1-2015/080659
- DE-A1-102013 209 045
- DE-A1-102013 209 045
- DE-A1-102014 115 377
- DE-A1-102014 115 377
- DE-A1-102015 006 387
- GB-A- 2 462 904
- US-A1- 2008 251 235
- US-A1- 2008 251 303
- US-A1- 2012 109 433
- US-A1- 2012 225 341

## Description

### BACKGROUND OF THE INVENTION AND PRIOR ART

The present invention relates to a cooling system for an electric power unit in a vehicle according to the preamble of claim 1.

Hybrid vehicles may be powered by an electric power unit in combination with some other form of power unit such as a combustion engine. The electric power unit may comprise an electric machine which alternately works as motor and generator, an electric energy storage for storing of electrical energy and power electronics for controlling the flow of electrical energy between the electrical energy storage and the electric machine. The power electronics may include a DC converter and an inverter for conducting electrical energy between the electrical energy storage and the electric machine. The electrical energy storage and the power electronics are heated during operation. The electrical energy storage and power electronics are designed to operate within a specific temperature range. The electrical energy storage may have an optimal efficient operating temperature within the temperature range of 20-25°C. The power electronics can usually withstand a temperature up to about 60-70 °C. Consequently, it is suitable to cool the electrical energy storage and the power electronics with coolant of different temperatures. Furthermore, the efficiency of the electrical energy storage is reduced than it has a too low temperature. Consequently, it is also suitable to heat the electrical energy storage during operating conditions when it has a too low temperature.

DE 10 2014 115 377 A1 shows a cooling system for a motor vehicle comprising at least a first radiator and a second radiator mounted in a front region of the motor vehicle. The cooling system comprises a first circuit which cools electric batteries and a second circuit which cools power electronic components. The cooling system comprises valves which are able to selectively connect the first circuit to the first radiator and the second circuit to the second radiator. Furthermore, the valves are able to separate the first circuit from the first radiator and connect the second circuit to the first radiator and the second radiator which radiators are arranged in parallel. Alternatively, the valves are able to separate the second circuit from the second radiator and connect the first circuit to the parallel arranged radiators.

### SUMMARY OF THE INVENTION

The object of the present invention is to provide a cooling system for cooling of an electric energy storage and power electronics which is able to prevent heating of the power electronics to a too high temperature during operating conditions when the surrounding air temperature and the cooling demand are very high.

The above mentioned object is achieved by the cooling system according to the characterized part of claim 1. The power electronics are cooled by coolant in a high temperature cooling circuit and the electric energy storage is cooled by coolant in a low temperature cooling circuit. The use of two cooling circuits with different coolant temperatures makes it possible to provide an individual cooling of the electric energy storage and the power electronics. During occasions when the surround air temperature is higher or close to an optimal efficient operating temperature of the electrical energy storage, it is not possible to cool the coolant in the second radiator by surrounding air to a temperature low enough to cool the electrical energy storage. In this case, the electric energy storage is to be cooled by the refrigeration system. During such operating conditions, the first flow means directs the coolant in the low temperature cooling circuit, via the bypass line, past the second radiator. Since the low temperature cooling circuit does not use the second radiator, it can be used by the high temperature cooling circuit. As a consequence, the second flow means directs coolant from the high temperature cooling circuit, which has been cooled in a first step in the first radiator, to the second radiator. When the coolant has been cooled in a second step in the second radiator, the coolant is directed back to the high temperature cooling circuit. Since the coolant is directed in series through the first radiator and the second radiator, it is possible to cool the coolant to a low temperature. It is substantially always possible to cool the coolant in the second step in the second radiator to a temperature low enough to cool the power electronics to an efficient operating temperature. Consequently, no additional radiator has to be used for cooling the coolant in the high temperature cooling circuit during operating conditions when the surrounding air temperature and the cooling demand are very high.

According to an embodiment of the invention, the second flow means comprises a first connection line having an extension between a first end connected to the high temperature cooling circuit in a position downstream of the first radiator and a second end connected to the low temperature cooling circuit in a position upstream of the second radiator, a first valve device configured to control the coolant flow through the first connection line, a second connection line having an extension between a first end connected to the low temperature cooling circuit in a position downstream of the second radiator and a second end connected to the high temperature cooling circuit in a position downstream of the first end of the first connection line, and a second valve device configured to control the coolant flow through the second connection line. The first connection line and the first valve device make it easy to direct coolant, which has been cooled in a first step in the first radiator, to the second radiator in the low temperature cooling circuit. The second connection line and the second valve device make it easy to direct the coolant back to the high temperature cooling circuit as soon as the coolant has been cooled in the second radiator.

According to an embodiment of the invention, the first valve device is a first three way valve arranged in the first end or the second end of the first connection line. Thus, the first three way valve may be arranged in a connection point between the first connection line and the high temperature cooling circuit or in a connection point between the first connection line and the low temperature cooling circuit. Alternatively, the first valve device may comprise a two way valve arranged in the first connection line in a position between its ends and a complimentary two way valve arranged in a suitable position of the high temperature cooling circuit or the low temperature cooling circuit.

According to an embodiment of the invention, the second valve device is a second three way valve arranged in the first end or the second end of the second connection line. Thus, the second three way valve may be arranged in a connection point between the second connection line and the high temperature cooling circuit or in a connection point between the second connection line and the low temperature cooling circuit. Alternatively, the second valve device comprises a two way valve arranged in the second connection line in a position between its ends and a complimentary two way valve arranged in a suitable position of the high temperature cooling circuit or the low temperature cooling circuit.

According to an embodiment of the invention, the first flow means comprises a bypass line having an extension between an first end connected to the low temperature cooling circuit in a position upstream of the second radiator and an second end connected to the low temperature cooling circuit in a position downstream of the second radiator, and a bypass valve device configured to control the coolant flow through the bypass line. The bypass line and the bypass valve device make it easy to alternatively direct the coolant in the low temperature cooling circuit to the second radiator or past the second radiator. The bypass valve device may be a three way valve arranged in the first end or the second end of the bypass line. Alternatively, the bypass valve device comprises a two way valve arranged in the bypass line in a position between said ends and a two way valve arranged in a suitable position in the low temperature cooling circuit.

According to an embodiment of the invention, the first end of the bypass line is arranged in a position upstream of the second end of the first connection line in the low temperature cooling circuit. Such a design is necessary in order to avoid mixing of the coolants in the low temperature cooling circuit with the coolant in the high temperature cooling circuit. The second end of the bypass line is arranged in a position downstream of the first end of the second connection line in the low temperature cooling circuit. Such a design is also necessary in order to avoid mixing of the coolants in the respective cooling circuits.

According to an embodiment of the invention, the cooling system comprises a control unit configured to receive information about the temperature of the electrical energy storage and the temperature of the power electronics, and to control the cooling system by means of these information. In this case, the control unit may receive information about the temperature of the coolant when it has cooled the electrical energy storage in the low temperature cooling circuit and the temperature of the coolant when it has cooled the power electronics in the high temperature cooling circuit. If the temperature of the electrical energy storage and/or the power electronics are not within an efficient operating temperature range, the control unit provides measures adjusting the cooling power in the high temperature cooling circuit and/or the low temperature cooling circuit.

According to an embodiment of the invention, the cooling system is configured to receive information about surrounding air temperature and to control the valve devices such that coolant from the high temperature cooling circuit is cooled in a first step in the first radiator and in a second step in the second radiator when the surrounding air temperature exceeds a predetermined temperature. In case surrounding air temperature is higher or close to an efficient operating temperature of the electrical energy storage, it is not possible to use the second radiator for cooling the coolant in the low temperature cooling circuit to a temperature low enough to cool the electrical energy storage. In this case, the control unit directs the coolant in the low temperature cooling circuit to the bypass line by means of the bypass valve. If the temperature of the power electronics is high at the same time, the control unit controls the valve devices such that the coolant in the high temperature cooling circuit is cooled in a first step in the first radiator and in a second step in the second radiator before it is directed to the power electronics. This measure results in that the coolant will be cooled to a temperature low enough to cool the power electronics to an efficient operating temperature.

According to an embodiment of the invention, the cooling system comprises a first radiator fan configured to provide a first air flow through a first part of the first radiator and the second radiator, and a second radiator fan configured to provide a second air flow through a second part of the first radiator and a condenser in the refrigeration system. In some cases, it is favorable to provide air flows of different sizes through the radiators. Said first part of the first radiator is arranged in a position downstream of the second radiator with respect to the intended flow direction of the first air flow. In this case, the coolant in the low temperature cooling circuit is cooled to a lower temperature than the coolant in the high temperature cooling circuit. Such a temperature difference between the coolants in the respective cooling circuits is necessary in order to provide a cooling of the electric energy storage to a lower temperature than the power electronics.

According to an embodiment of the invention, said second part of the first radiator is arranged in a position downstream of the condenser in the refrigeration system with respect to the direction of the second air flow. Such an arrangement of the condenser and the first radiator is advantageous since the refrigerant usually needs to be cooled to a lower temperature than the coolant in the high temperature cooling circuit.

According to an embodiment of the invention, each radiator fan may be driven by an electric motor. The speed of an electric motor is easily adjustable and thus the speed of the radiator fans and the cooling air flow rates through the radiators and the condenser. The speed of the radiator fans may be controlled by a control unit. The control unit may receive information about the temperature of the electric energy storage and power electronics and to control the radiator fans in order to continuously maintain an efficient operating temperature of the electric energy storage and power electronics.

### BRIEF DESCRIPTION OF THE DRAWING

In the following a preferred embodiment of the invention is described, as an example, and with reference to the attached drawing, in which:

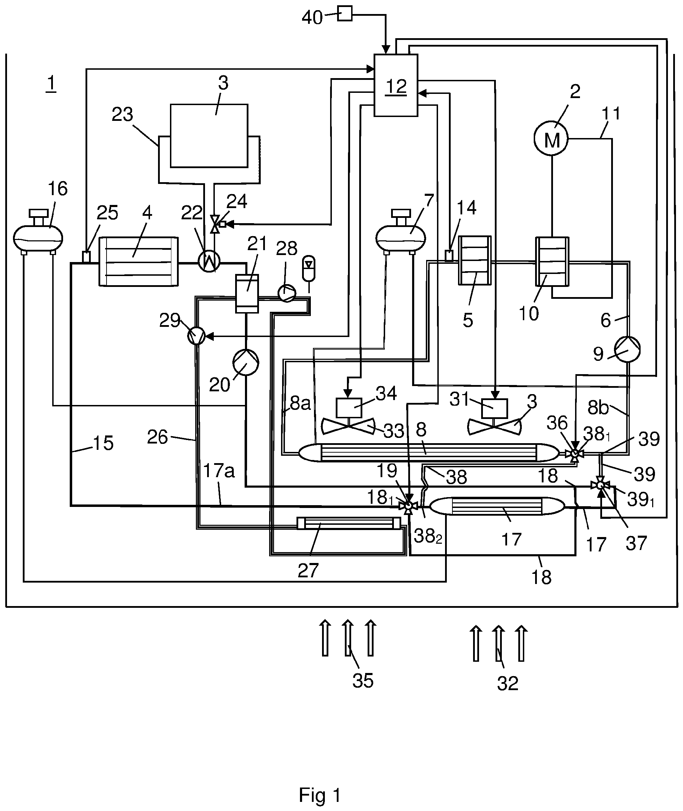

- Fig. 1: shows a cooling system according to an embodiment of the invention.

### DETAILED DESCRIPTION OF A PREFERRED EMBODIMENT OF THE INVENTION

Fig. 1 shows a cooling system for a schematically indicated hybrid vehicle 1. The hybrid vehicle 1 is a powered by an electric machine 2 and a combustion engine 3. The electric machine works alternately as motor and generator. The hybrid vehicle 1 comprises an electric energy storage 4 for storing of electrical energy and power electronics 5 for controlling the flow of electrical energy between the electrical energy storage 4 and the electric machine 2. The electrical energy storage 4 and the power electronics 5 are heated during operation. Thus, the electrical energy storage 4 and the power electronics 5 need to be cooled during operation.

The electrical energy storage 4 and the power electronics 5 are design to work within a respective specific temperature range. The electrical energy storage 4 is designed to have a lower temperature than the power electronics 5. The electrical energy storage 4 may have an optimal efficiency temperature within the temperature range of 20-25°C. The power electronics 5 can usually withstand a temperature up to about 60-70 °C. During certain operating conditions such as after a cold start, the temperature of the electrical energy storage 4 can be too low. In this case, it is suitable to use the cooling system for heating the electrical energy storage 4.

The cooling system comprises a high temperature cooling circuit 6 with a circulating coolant. The high temperature cooling circuit 6 is indicated by a double line in fig. 1. The high temperature cooling circuit 6 comprises an expansion tank 7. The high temperature cooling circuit further comprises a first radiator 8 where the coolant is cooled. The coolant enters the first radiator 8 via a first radiator inlet line 8a and leaves the first radiator via a first radiator outlet line 8b. The first radiator outlet line 8b directs the coolant to a pump 9 which circulates the coolant in the high temperature cooling circuit 6. The pump 9 directs the coolant to a first heat exchanger 10. The coolant cools an oil in the first heat exchanger 10 which is circulated in circuit 11 for cooling of the electric machine 2. The coolant leaving the first heat exchanger 10 enters the power electronics 5. A temperature sensor 14 measures the temperature of the coolant leaving the power electronics 5. Finally, the coolant in the high temperature cooling circuit 6 is returned to the first radiator 8. Consequently, the coolant in the high temperature cooling circuit is used to cool the power electronics 5.

The cooling system comprises a low temperature cooling circuit 15 with a circulating coolant. The low temperature cooling circuit 15 comprises an expansion tank 16. The low temperature cooling circuit 15 further comprises a second radiator 17 where the coolant in the low temperature cooling circuit 15 is cooled. The coolant enters the second radiator 17 via a second radiator inlet line 17a and leaves the second radiator 17 via a second radiator outlet line 17b. The second radiator inlet line 17a comprises a bypass valve device 19. The bypass valve device 19 can direct the coolant to the second radiator 17 or to a bypass line 18 directing the coolant past the second radiator 17 and to the second radiator outlet line 17b. The second radiator outlet line 17b directs the coolant to a pump 20 which circulates the coolant in the low temperature cooling circuit 15. The pump20 directs the coolant to a chiller 21 where the coolant in the low temperature cooling circuit 15 is cooled. Thereafter the coolant enters a second heat exchanger 22 where the coolant can be heated by coolant from the cooling system cooling the combustion engine 3. In this case, a second heating circuit 23 with coolant is used to heat the coolant in the low temperature cooling circuit. The control unit 12 regulates the coolant flow to the second heat exchanger 22 by means of a valve 24. Alternatively, an electric heater can be used to heat the coolant in the low temperature cooling circuit. The coolant leaving the second heat exchanger 22 enters the electrical energy storage 4. A temperature sensor 25 measures the temperature of the coolant when it leaves the electrical energy storage 4. It is also possible to measures the temperature of the coolant before it enters the electrical energy storage 4. Finally, the coolant in the low temperature cooling circuit 15 is returned to the second radiator 17. Consequently, the coolant in the low temperature cooling circuit is used to cool the electrical energy storage 4 but it can also be used to heat the electrical energy storage 4.

The cooling system comprises a first connection line 38 having an extension between a first end 38₁ connected to the high temperature cooling circuit 6 in a position downstream of the first radiator 8 and a second end 38₂ connected to the low temperature cooling circuit 15 in a position upstream of the second radiator 17. A first valve device in the form of a first three way valve 36 is configured to control the coolant flow through the first connection line 38. The cooling system further comprises a second connection line 39 having an extension between a first end 39₁ connected to the low temperature cooling circuit 6 in a position downstream of the second radiator 17 and a second end 39₂ connected to the high temperature cooling circuit 6 in a position downstream of the first end 38₁ of the first connection line 38. A second valve device in the form of a second three way valve 37 configured to control the coolant flow through the second connection line 39. A first end 18₁ of the bypass line 18 is arranged in a position upstream of the second radiator 17 and the second end 38₂ of the first connection line 38. The second end 18₂ of the bypass line 18 is arranged in a position downstream of the second radiator 17 and the first end 39₁ of the second connection line 39. The bypass valve device 18 and the three way valves 36, 37 are controlled by the control unit 12.

The hybrid vehicle 1 comprises a refrigeration system 26 with a circulating refrigerant. The refrigeration system 26 comprises a condenser 27 where the refrigerant condenses. The liquefied refrigerant is directed to an expansion valve 28 where it experiences a pressure drop and a significantly lower temperature. Thereafter, the refrigerant enters an evaporator in the form of the chiller 21 in the low temperature cooling circuit. The refrigerant is heated by the coolant in the chiller 21 such that it vaporizes. The vaporized refrigerant is directed to a compressor 29. The compressor 29 provides a compression of the refrigerant such that it has an increased pressure and an increased temperature when it leaves the compressor 29 and enters the condenser 27.

The cooling system comprises a first radiator fan 30 driven by a first electric motor 31. The control unit 12 controls the first electric motor 31 and the speed of the first radiator fan 30. The radiator fan 30 provides a first air flow 32 through a half of the first radiator 8 in the high temperature cooling circuit and the second radiator 17 in the low temperature cooling circuit 15. The second radiator 17 is arranged in a position upstream of the first radiator 8 with respect to the flow direction of the first air flow 32. Thus, the coolant in the second radiator 17 is cooled to a lower temperature than the coolant in the first radiator 8. The cooling system comprises a second radiator fan 33 driven by a second electric motor 34. The control unit 12 controls the second electric motor 34 and the speed of the second radiator fan 33. The second radiator fan 33 provides a second air flow 35 through a remaining half of the first radiator 8 and the condenser 27 of the refrigeration system. The condenser 27 of the refrigerant system 26 is arranged in a position upstream of the first radiator 8 with respect to the flow direction of the second air flow 35. Usually, the refrigerant is cooled to a lower temperature in the condenser 27 than the coolant in the first radiator 8 but it depends on condenser load, condenser performance and radiator performance.

During operation of the hybrid vehicle 1, the control unit 12 receives information about the temperature of the coolant from the first temperature sensor 14 and information about the temperature of the coolant from the second temperature sensor 25. The temperatures of the coolants are related to the temperatures of the electrical energy storage 4 and the power electronics 5. Alternatively, temperature sensors may be used which directly measures the temperatures of the electrical energy storage 4 and the power electronics 5. The control unit 12 controls the speed of the first radiator fan 30 and the second radiator fan 33 and thus the cooling of the coolant in the first radiator 8. The coolant is cooled in the first radiator 8 to a temperature at which it provides a suitable cooling of the power electronics 5. The control unit 12 controls the speed of the second radiator fan 34 and the cooling of the coolant in the second radiator 17. The coolant in the low temperature cooling circuit 15 is cooled in the second radiator 17 and/or in the chiller 21 before it cools the electrical energy storage 4.

In case the electrical energy storage 4 has a too low temperature, the control unit 12 can reduce the actual speed of the first radiator fan 30 and the cooling of the coolant the second radiator 17. Alternatively, the control unit 12 can reduce the actual speed of the second radiator fan 33 and reduce the cooling of the refrigerant in the condenser 27. Furthermore, the control unit 12 can set the bypass valve device 19 in a bypass position in which it directs the coolant flow, via the bypass line 18, past the second radiator 17. The control unit 12 also can shut off the compressor 29 of the compressor refrigeration system 26. As a result, the coolant receives no cooling in the chiller 21. Finally, the control unit 12 may open the valve 24 such that the coolant cooling the combustion engine 3 heats the coolant in the second heat exchanger 22 before it enters the electrical energy storage 4.

In case the electrical energy storage 4 has a too high temperature, the control unit 12 can increase the speed of the first fan 30 such that the coolant is cooled to a lower temperature in the second radiator 17. Alternately or in combination, the control unit 12 can activate the compressor 29 and provide a cooling of the coolant in a second step in the chiller 21 before it enters the electrical energy storage 4. In order to further increase the cooling of the second coolant, the control unit 12 can increase the actual speed of the radiator fan 33 such that the refrigerant receives a lower condensation temperature in the condenser 27 resulting in an increased cooling of the coolant in the chiller 21.

In case the power electronics 5 has a too low temperature, the control unit 12 can reduce the actual speed of the radiator fan 30 and/or the actual speed of the second fan 33 such that the coolant leaving the first radiator 8 receives a somewhat higher temperature.

In case the power electronics 5 has a too high temperature, the control unit 12 can increase the speed of the first fan 30 and/or the speed of the second fan 33 such that the first coolant is cooled to a lower temperature in the radiator 8. However, in case the surrounding air has a temperature of 20°C or higher, it is not possible to use the second radiator 17 for cooling of the coolant in the low temperature cooling circuit 15 to a temperature sufficiently low to cool the electrical energy storage 4 to an efficient operating temperature. In this case, the refrigeration system 26 has to supply the entire cooling power of the electrical energy storage 4. The control unit 12 controls the bypass valve device 19 such that it directs the coolant in the low temperature cooling circuit, via the bypass line 18, past the second radiator 17. Furthermore, the control unit 12 controls the first three way valve 36 such that it directs the coolant leaving the first radiator 8, via the first connection line 38, to the second radiator inlet line 17a in a position downstream of the bypass valve device 19. Furthermore, the control unit 12 controls the second three way valve 37 such that it directs the coolant leaving the second radiator 17, via the second connection line 39, back to the first radiator outlet line 17a in a position downstream of the first three way valve 36 in the high temperature cooling circuit 6. In this case, the coolant in the high temperature cooling circuit is cooled in the first radiator 8 in a first step and in the second radiator 17 in a second step. This measure results in a lower temperature of the coolant directing to the power electronics 5.

Consequently, the control unit 12 has a lot of options to regulate the temperature of the coolant in the low temperature cooling circuit 15 before it cools the electrical energy storage 4 and the coolant in the high temperature cooling circuit 6 before it cools the power electronics 5. The control unit 12 has access to information about the most energy efficient option to cool the electrical energy storage 4 and the power electronics 5 to a temperature within an efficiency operating temperature range. The most energy efficient option can be defined as a minimum supply of electric energy to the radiator fans 30, 31 and to the compressor 29 of the refrigeration system 26.

The invention is in no way confined to the embodiment to which the drawings refer but may be varied freely within the scopes of the claims.

## Claims

1. A cooling system for an electric power unit in a vehicle (1), wherein the electric power unit comprises an electric machine (2), an electric energy storage (4) for storing of electrical energy and power electronics (5) for controlling the flow of electrical energy between the electrical energy storage (4) and the electric machine (2), and wherein the cooling system comprises a high temperature cooling circuit (6) with a circulating coolant for cooling the power electronics (5), a first radiator (8) arranged in the high temperature cooling circuit (6), a low temperature cooling circuit (15) with a circulating coolant for cooling the electric energy storage (4), a second radiator (17) arranged in the low temperature cooling circuit (15) and a refrigeration system (26) configured to cool the coolant in the low temperature cooling circuit (15) in a chiller (21), **characterized in that**, during an operating condition when it is not possible to cool the coolant in the second radiator (17) by surrounding air to a temperature low enough to cool the electrical energy storage (4), the cooling system comprises first flow means (18, 19) directing coolant in the low temperature cooling circuit (15) past the second radiator (17) and second flow means (36-39) directing coolant in the high temperature cooling circuit to the first radiator (8) where it is cooled in a first step and then to the second radiator (17) where it is cooled in a second step before it is used to cool the power electronics (5).

2. A cooling system according to claim 1, **characterized in that** the second flow means comprises a first connection line (38) having an extension between a first end (38₁) connected to the high temperature cooling circuit (15) in a position downstream of the first radiator (8) and a second end (38₂) connected to the low temperature cooling circuit (15) in a position upstream of the second radiator (17), a first valve device (36) configured to control the coolant flow through the first connection line (38), a second connection line (39) having an extension between a first end (39₁) connected to the low temperature cooling circuit (6) in a position downstream of the second radiator (17) and a second end (39₂) connected to the high temperature cooling circuit (6) in a position downstream of the first end (38₁) of the first connection line (38), and a second valve device (37) configured to control the coolant flow through the second connection line (39).

3. A cooling system according to claim 2, **characterized in that** the first valve device is a three way valve (36) arranged at the first end (38₁) or the second end (38₂) of the first connection line (38).

4. A cooling system according to claim 2 or 3, **characterized in that** the second valve device is a three way valve (37) arranged at the first end (39₁) or the second end (39₂) of the second connection line (39).

5. A cooling system according to any one of the preceding claims, **characterized in that** the first flow means comprises a bypass line (18) having an extension between a first end (18₁) connected to the low temperature cooling circuit (15) in a position upstream of the second radiator (17) and a second end (18₂) connected to the low temperature cooling circuit (15) in a position downstream of the second radiator (17), and a bypass valve device (19) configured to control the coolant flow through the bypass line (18).

6. A cooling system according to claim 5, **characterized in that** the bypass valve device is a three way valve (19) arranged at the first end (18₁) or the second end (18₂) of the bypass line (18).

7. A cooling system according to claims 2 and 5, **characterized in that** the first end (18₁) of the bypass line (18) is arranged in a position upstream of the second end (38₂) of the first connection line (38) in the low temperature cooling circuit (15).

8. A cooling system according to any one of the claims 2 and 5, **characterized in that** the second end (18₂) of the bypass line (18) is arranged in a position downstream of the first end (39₁) of the second connection line (39) in the low temperature cooling circuit (15).

9. A cooling system according to any one of the preceding claims, **characterized in that** the cooling system comprises a control unit (12) configured to receive information about the temperature of the electrical energy storage (4) and the temperature of the power electronics (5), and to control the cooling system by means of this information.

10. A cooling system according to claim 9, **characterized in that** the cooling system is configured to receive information about surround air temperature (40), and to control the valve devices (36, 37) such that the coolant in the high temperature cooling circuit is cooled in a first step in the first radiator (8) and in a second step in the second radiator (17) when the surrounding air temperature (40) exceeds a predetermined temperature.

11. A cooling system according to any one of the preceding claims, **characterized in that** it comprises a first radiator fan (30) configured to provide a first air flow (32) through a first part of the first radiator (8) and the second radiator (17), and a second radiator fan (33) configured to provide a second air flow (35) through a second part of the first radiator (8) and a condenser (27) of the refrigeration system (26).

12. A cooling system according to claim 11 **characterized in that** said first part of the first radiator (8) is arranged in a position downstream of the second radiator (17) with respect to the intended flow direction of the first air flow (32).

13. A cooling system according to claim 11, **characterized in that** said second part of the first radiator (8) is arranged in a position downstream of the condenser (27) of the refrigeration system with respect to the flow direction of the second air flow (35).

14. A cooling system according to claim 11, **characterized in that** each radiator fans (30, 33) is driven by an electric motor (31, 34).

15. A cooling system according to claim 14, **characterized in that** the speed of the radiator fans (30, 33) are controlled by a control unit (12).

## Patentansprüche

1. Kühlsystem für ein elektrisches Antriebsaggregat in einem Fahrzeug (1), wobei das elektrische Antriebsaggregat eine elektrische Maschine (2), einen elektrischen Energiespeicher (4) zum Speichern elektrischer Energie und Leistungselektronik (5) zum Steuern des Stroms von elektrischer Energie zwischen dem elektrischen Energiespeicher (4) und der elektrischen Maschine (2) aufweist, und wobei das Kühlsystem einen Hochtemperaturkühlkreis (6) mit einem zirkulierenden Kühlmittel zum Kühlen der Leistungselektronik (5), einen in dem Hochtemperaturkühlkreis (6) angeordneten ersten Kühler (8), einen Niedertemperaturkühlkreis (15) mit einem zirkulierenden Kühlmittel zum Kühlen des elektrischen Energiespeichers (4), einen in dem Niedertemperaturkühlkreis (15) angeordneten zweiten Kühler (17) und ein Kältesystem (26) aufweist, das dazu eingerichtet ist, das Kühlmittel in dem Niedertemperaturkühlkreis (15) in einer Kältemaschine (21) zu kühlen, **dadurch gekennzeichnet, dass** während einer Betriebsbedingung, bei der es nicht möglich ist, das Kühlmittel in dem zweiten Kühler (17) durch Umgebungsluft auf eine ausreichend niedrige Temperatur zum Kühlen des elektrischen Energiespeichers (4) zu kühlen, das Kühlsystem erste Strömungsmittel (18, 19), die Kühlmittel in dem Niedertemperaturkühlkreis (15) am zweiten Kühler (17) vorbeileiten, und zweite Strömungsmittel (36-39) umfassen, die Kühlmittel in dem Hochtemperaturkühlkreis zum ersten Kühler (8), wo es in einem ersten Schritt gekühlt wird, und dann zum zweiten Kühler (17) leiten, wo es in einem zweiten Schritt gekühlt wird, bevor es zum Kühlen der Leistungselektronik (5) verwendet wird.

2. Kühlsystem nach Anspruch 1, **dadurch gekennzeichnet, dass** die zweiten Strömungsmittel eine erste Verbindungsleitung (38), die eine Erstreckung zwischen einem ersten Ende (38₁), das an einer Stelle stromabwärts des ersten Kühlers (8) mit dem Hochtemperaturkühlkreis (15) verbunden ist, und einem zweiten Ende (38₂) hat, das an einer Stelle stromaufwärts des zweiten Kühlers (17) mit dem Niedertemperaturkühlkreis (15) verbunden ist, eine erste Ventileinrichtung (36), die dazu eingerichtet ist, den Kühlmittelfluss durch die erste Verbindungsleitung (38) zu steuern, eine zweite Verbindungsleitung (39), die eine Erstreckung zwischen einem ersten Ende (39₁), das an einer Stelle stromabwärts des zweiten Kühlers (17) mit dem Niedertemperaturkühlkreis (6) verbunden ist, und einem zweiten Ende (39₂) hat, das an einer Stelle stromabwärts des ersten Endes (38₁) der ersten Verbindungsleitung (38) mit dem Hochtemperaturkühlkreis (6) verbunden ist, und eine zweite Ventileinrichtung (37) aufweist, die dazu eingerichtet ist, den Kühlmittelfluss durch die zweite Verbindungsleitung (39) zu steuern.

3. Kühlsystem nach Anspruch 2, **dadurch gekennzeichnet, dass** die erste Ventileinrichtung ein Dreiwegeventil (36) ist, das an dem ersten Ende (38₁) oder dem zweiten Ende (38₂) der ersten Verbindungsleitung (38) angeordnet ist.

4. Kühlsystem nach Anspruch 2 oder 3, **dadurch gekennzeichnet, dass** die zweite Ventileinrichtung ein Dreiwegeventil (37) ist, das an dem ersten Ende (39₁) oder dem zweiten Ende (39₂) der zweiten Verbindungsleitung (39) angeordnet ist.

5. Kühlsystem nach einem der vorhergehenden Ansprüche, **dadurch gekennzeichnet, dass** die ersten Strömungsmittel eine Bypassleitung (18), die eine Erstreckung zwischen einem ersten Ende (18₁), das an einer Stelle stromaufwärts des zweiten Kühlers (17) mit dem Niedertemperaturkühlkreis (15) verbunden ist, und einem zweiten Ende (18₂) hat, das an einer Stelle stromabwärts des zweiten Kühlers (17) mit dem Niedertemperaturkühlkreis (15) verbunden ist, und eine Bypassventileinrichtung (19) umfasst, die dazu eingerichtet ist, den Kühlmittelfluss durch die Bypassleitung (18) zu steuern.

6. Kühlsystem nach Anspruch 5, **dadurch gekennzeichnet, dass** die Bypassventileinrichtung ein Dreiwegeventil (19) ist, das an dem ersten Ende (18₁) oder dem zweiten Ende (18₂) der Bypassleitung (18) angeordnet ist.

7. Kühlsystem nach den Ansprüchen 2 und 5, **dadurch gekennzeichnet, dass** das erste Ende (18₁) der Bypassleitung (18) an einer Stelle stromaufwärts des zweiten Endes (38₂) der ersten Verbindungsleitung (38) in dem Niedertemperaturkühlkreis (15) angeordnet ist.

8. Kühlsystem nach einem der Ansprüche 2 und 5, **dadurch gekennzeichnet, dass** das zweite Ende (18₂) der Bypassleitung (18) an einer Stelle stromabwärts des ersten Endes (39₁) der zweiten Verbindungsleitung (39) in dem Niedertemperaturkühlkreis (15) angeordnet ist.

9. Kühlsystem nach einem der vorhergehenden Ansprüche, **dadurch gekennzeichnet, dass** das Kühlsystem eine Steuereinheit (12) umfasst, die dazu eingerichtet ist, Information über die Temperatur des elektrischen Energiespeichers (4) und die Temperatur der Leistungselektronik (5) zu erhalten und das Kühlsystem mittels dieser Information zu steuern.

10. Kühlsystem nach Anspruch 9, **dadurch gekennzeichnet, dass** das Kühlsystem dazu eingerichtet ist, Information über Umgebungslufttemperatur (40) zu erhalten und die Ventileinrichtungen (36, 37) so zu steuern, dass das Kühlmittel in dem Hochtemperaturkühlkreis in einem ersten Schritt in dem ersten Kühler (8) gekühlt wird und in einem zweiten Schritt in dem zweiten Kühler (17), wenn die Umgebungslufttemperatur (40) eine vorbestimmte Temperatur übersteigt.

11. Kühlsystem nach einem der vorhergehenden Ansprüche, **dadurch gekennzeichnet, dass** es einen ersten Kühlerlüfter (30), der dazu eingerichtet ist, für einen ersten Luftstrom (32) durch einen ersten Teil des ersten Kühlers (8) und den zweiten Kühler (17) zu sorgen, und einen zweiten Kühlerlüfter (33) umfasst, der dazu eingerichtet ist, für einen zweiten Luftstrom (35) durch einen zweiten Teil des ersten Kühlers (8) und einen Kondensator (27) des Kältesystems (26) zu sorgen.

12. Kühlsystem nach Anspruch 11, **dadurch gekennzeichnet, dass** der erste Teil des ersten Kühlers (8) bezüglich der vorgesehenen Strömungsrichtung des ersten Luftstroms (32) an einer Stelle stromabwärts des zweiten Kühlers (17) angeordnet ist.

13. Kühlsystem nach Anspruch 11, **dadurch gekennzeichnet, dass** der zweite Teil des ersten Kühlers (8) bezüglich der Strömungsrichtung des zweiten Luftstroms (35) an einer Stelle stromabwärts des Kondensators (27) des Kältesystems angeordnet ist.

14. Kühlsystem nach Anspruch 11, **dadurch gekennzeichnet, dass** jeder Kühlerlüfter (30, 33) von einem Elektromotor (31, 34) angetrieben ist.

15. Kühlsystem nach Anspruch 14, **dadurch gekennzeichnet, dass** die Drehzahl der Kühlerlüfter (30, 33) durch eine Steuereinheit (12) gesteuert ist.

## Revendications

1. Système de refroidissement pour une unité d'alimentation électrique dans un véhicule (1), dans lequel l'unité d'alimentation électrique comprend une machine électrique (2), un stockage d'énergie électrique (4) destiné à stocker de l'énergie électrique et une électronique de puissance (5) destinée à réguler le flux d'énergie électrique entre le stockage d'énergie électrique (4) et la machine électrique (2), et dans lequel le système de refroidissement comprend un circuit de refroidissement à haute température (6) avec un liquide de refroidissement circulant destiné à refroidir l'électronique de puissance (5), un premier radiateur (8) disposé dans le circuit de refroidissement à haute température (6), un circuit de refroidissement à basse température (15) avec un liquide de refroidissement circulant destiné à refroidir le stockage d'énergie électrique (4), un second radiateur (17) disposé dans le circuit de refroidissement à basse température (15) et un système de réfrigération (26) configuré pour refroidir le liquide de refroidissement dans le circuit de refroidissement à basse température (15) dans un refroidisseur (21), **caractérisé en ce que**, pendant un état de fonctionnement lorsqu'il n'est pas possible de refroidir le liquide de refroidissement dans le second radiateur (17) par l'air environnant jusqu'à une température suffisamment basse pour refroidir le stockage d'énergie électrique (4), le système de refroidissement comprend un premier moyen d'écoulement (18, 19) dirigeant le liquide de refroidissement dans le circuit de refroidissement à basse température (15) au-delà du second radiateur (17) et un second moyen d'écoulement (36-39) dirigeant le liquide de refroidissement dans le circuit de refroidissement à haute température vers le premier radiateur (8) où il est refroidi dans une première étape puis vers le second radiateur (17) où il est refroidi dans une seconde étape avant d'être utilisé pour refroidir l'électronique de puissance (5).

2. Système de refroidissement selon la revendication 1, **caractérisé en ce que** le second moyen d'écoulement comprend une première ligne de connexion (38) ayant une extension entre une première extrémité (38₁) connectée au circuit de refroidissement à haute température (15) dans une position en aval du premier radiateur (8) et une seconde extrémité (38₂) connectée au circuit de refroidissement à basse température (15) dans une position en amont du second radiateur (17), un premier dispositif de soupape (36) configuré pour réguler le flux de liquide de refroidissement à travers la première ligne de connexion (38), une seconde ligne de connexion (39) ayant une extension entre une première extrémité (39₁) connectée au circuit de refroidissement à basse température (6) dans une position en aval du second radiateur (17) et une seconde extrémité (39₂) connectée au circuit de refroidissement à haute température (6) dans une position en aval de la première extrémité (38₁) de la première ligne de connexion (38), et un second dispositif de soupape (37) configuré pour réguler le flux de liquide de refroidissement à travers la seconde ligne de connexion (39) .

3. Système de refroidissement selon la revendication 2, **caractérisé en ce que** le premier dispositif de soupape est une soupape à trois voies (36) disposée au niveau de la première extrémité (38₁) ou de la seconde extrémité (38₂) de la première ligne de connexion (38).

4. Système de refroidissement selon la revendication 2 ou 3, **caractérisé en ce que** le second dispositif de soupape est une soupape à trois voies (37) disposée au niveau de la première extrémité (39₁) ou de la seconde extrémité (39₂) de la seconde ligne de connexion (39).

5. Système de refroidissement selon l'une quelconque des revendications précédentes, **caractérisé en ce que** le premier moyen d'écoulement comprend une ligne de dérivation (18) ayant une extension entre une première extrémité (18₁) connectée au circuit de refroidissement à basse température (15) dans une position en amont du second radiateur (17) et une seconde extrémité (18₂) connectée au circuit de refroidissement à basse température (15) dans une position en aval du second radiateur (17), et un dispositif de soupape de dérivation (19) configuré pour réguler le flux de liquide de refroidissement à travers la ligne de dérivation (18) .

6. Système de refroidissement selon la revendication 5, **caractérisé en ce que** le dispositif de soupape de dérivation est une soupape à trois voies (19) disposée au niveau de la première extrémité (18₁) ou de la seconde extrémité (18₂) de la ligne de dérivation (18) .

7. Système de refroidissement selon les revendications 2 et 5, **caractérisé en ce que** la première extrémité (18₁) de la ligne de dérivation (18) est disposée dans une position en amont de la seconde extrémité (38₂) de la première ligne de connexion (38) dans le circuit de refroidissement à basse température (15).

8. Système de refroidissement selon l'une quelconque des revendications 2 et 5, **caractérisé en ce que** la seconde extrémité (18₂) de la ligne de dérivation (18) est disposée dans une position en aval de la première extrémité (39₁) de la seconde ligne de connexion (39) dans le circuit de refroidissement à basse température (15).

9. Système de refroidissement selon l'une quelconque des revendications précédentes, **caractérisé en ce que** le système de refroidissement comprend une unité de régulation (12) configurée pour recevoir des informations concernant la température du stockage d'énergie électrique (4) et la température de l'électronique de puissance (5), et pour réguler le système de refroidissement au moyen de ces informations.

10. Système de refroidissement selon la revendication 9, **caractérisé en ce que** le système de refroidissement est configuré pour recevoir des informations concernant la température de l'air environnant (40), et pour réguler les dispositifs de soupape (36, 37) de telle sorte que le liquide de refroidissement dans le circuit de refroidissement à haute température est refroidi dans une première étape dans le premier radiateur (8) et dans une seconde étape dans le second radiateur (17) lorsque la température de l'air environnant (40) dépasse une température prédéterminée.

11. Système de refroidissement selon l'une quelconque des revendications précédentes, **caractérisé en ce qu'**il comprend un premier ventilateur de radiateur (30) configuré pour fournir un premier flux d'air (32) à travers une première partie du premier radiateur (8) et le second radiateur (17), et un second ventilateur de radiateur (33) configuré pour fournir un second flux d'air (35) à travers une seconde partie du premier radiateur (8) et un condenseur (27) du système de réfrigération (26).

12. Système de refroidissement selon la revendication 11, **caractérisé en ce que** ladite première partie du premier radiateur (8) est disposée dans une position en aval du second radiateur (17) par rapport à la direction d'écoulement prévue du premier flux d'air (32).

13. Système de refroidissement selon la revendication 11, **caractérisé en ce que** ladite seconde partie du premier radiateur (8) est disposée dans une position en aval du condenseur (27) du système de réfrigération par rapport à la direction d'écoulement du second flux d'air (35).

14. Système de refroidissement selon la revendication 11, **caractérisé en ce que** chaque ventilateur de radiateur (30, 33) est entraîné par un moteur électrique (31, 34).

15. Système de refroidissement selon la revendication 14, **caractérisé en ce que** la vitesse des ventilateurs de radiateur (30, 33) est régulée par une unité de régulation (12).
